(19) Europäisches Patentamt
European Patent Office
Office européen des brevets

(11) **EP 2 504 154 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(51) Int Cl.:
***B29C 67/00*** *(2017.01)*

(21) Anmeldenummer: **10798490.8**

(22) Anmeldetag: **17.11.2010**

(86) Internationale Anmeldenummer:
**PCT/DE2010/001339**

(87) Internationale Veröffentlichungsnummer:
**WO 2011/063786 (03.06.2011 Gazette 2011/22)**

(54) **VERFAHREN UND VORRICHTUNG ZUM HERSTELLEN DREIDIMENSIONALER MODELLE**

METHOD AND DEVICE FOR PRODUCING THREE-DIMENSIONAL MODELS

PROCÉDÉ ET DISPOSITIF POUR FABRIQUER DES MODÈLES TRIDIMENSIONNELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2009 DE 102009055966**

(43) Veröffentlichungstag der Anmeldung:
**03.10.2012 Patentblatt 2012/40**

(73) Patentinhaber: **Voxeljet AG**
**86316 Friedberg (DE)**

(72) Erfinder:
• **EDERER, Ingo**
**82269 Geltendorf (DE)**
• **GRASEGGER, Josef**
**86391 Stadtbergen (DE)**

(74) Vertreter: **Helbig, Christian**
**Wagner + Helbig**
**Patentanwälte**
**Pfarrstrasse 14**
**80538 München (DE)**

(56) Entgegenhaltungen:
**WO-A2-94/19112 WO-A2-98/28124**

**Beschreibung**

Die Erfindung bezieht sich auf ein Verfahren und eine Vorrichtung zum Herstellen dreidimensionaler Modelle gemäß dem Oberbegriff des Patentanspruches 1.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In WO 98/28124 A2 offenbart auch ein Verfahren und eine Vorrichtung zur Herstellung dreidimensionaler Objekte aus Computerdaten.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Das 3D-Drucken auf Basis pulverförmiger Werkstoffe ist unter den Schichtbautechniken das schnellste Verfahren. Dabei gibt es unterschiedliche Ausführungsformen mit unterschiedlicher Charakteristik.

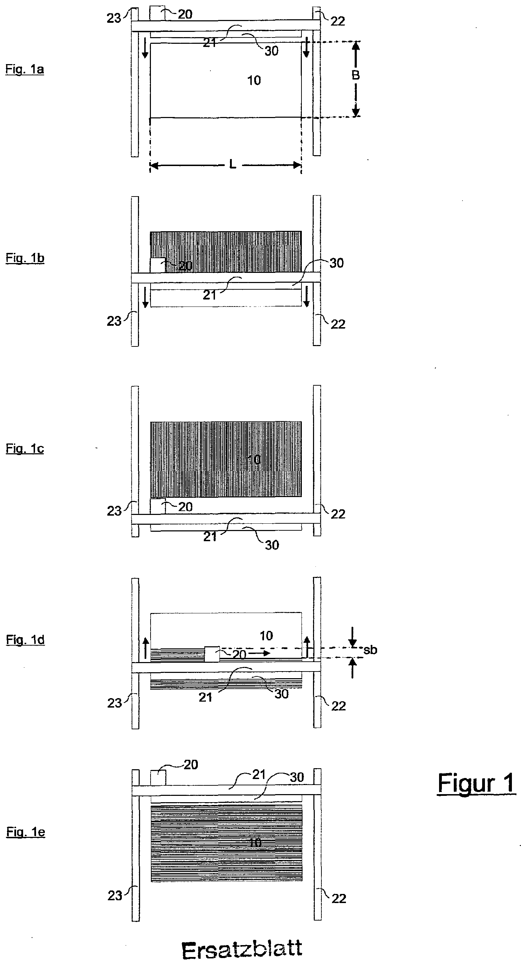

Eine Ausführungsform ist beispielsweise in der Figur 1 dargestellt. In der Figur 1 ist eine Vorrichtung zum schichtweisen Aufbau von Modellen in einer Draufsicht gezeigt. Der Beschichter 30 und die Druckkopfachse 21 verfahren bei der in Figur 1 gezeigten Vorrichtung auf denselben Verfahreinheiten, nämlich den Verfahrachsen 22, 23.

Zum einem Zeitpunkt $t_0$ verfährt eine Einheit, bestehend aus Druckkopf 20, Druckkopfachse 21 und Beschichter 30 von der Befüllposition in die Startposition, siehe Figur 1a) und beschichtet dann das Baufeld 10 mit einer Länge L und einer Breite B (Figur 1b)) mit Pulver (Abschluss der Beschichtung zum Zeitpunkt $t_1$, Figur 1c)).

Anschließend erfolgt das Bedrucken des Baufeldes (Start zum Zeitpunkt $t_2$) mit einem Druckkopf 20 endlicher Breite. Der Druckkopf 20 kann in diesem Fall einen Streifen mit der Druckbreite Sb mit der gewünschten Auflösung in einem Durchgang über die Baufeldlänge L (X-Richtung) bedrucken. Dies ist in der Figur 1d) dargestellt. In anderen Fällen, muss der Druckkopf 20 um die gewünschte Auflösung zu erzielen mehrfach über den Streifen drucken und dabei um kleine Strecken (< Sb) versetzt werden.

Im ersten Fall muss der Druckkopf, um eine Vollfläche zu bedrucken n-mal über das Baufeld geführt werden. Dabei wird Druckstreifen an Druckstreifen gesetzt, der Druckkopf also um die Druckkopfbreite in Y-Richtung nach jedem Streifen versetzt. Die Druckstreifen können dann entweder immer von der gleichen Seite (Unidirektionaldruck) oder wechselseitig (Bidirektionaldruck, siehe Abbildung) je nachdem wo der Druckkopf zuletzt stand angefahren werden.

Üblicherweise liefert der Unidirektionaldruck exaktere Druckanfangsseiten und damit saubere Bauteilkanten als der Bidirektionaldruck, da die Verzögerung der Tropfen im Flug immer auf die gleiche Weise wirkt. Im Bidirektionaldruck kann der Zeit-Unterschied des Tropfenfluges über einen Korrekturfaktor pro zweitem Streifen berücksichtigt werden.

Der Bidirektionaldruck ist die schnellere Variante des Druckens, da hier Leerfahrten des Druckkopfschlittens vermieden werden.

Die Zahl der notwendigen Druckstreifen ergibt sich als ganzzahliger Wert des Verhältnisses von Baufeldbreite B und Streifenbreite Sb

Nachdem der Druckkopf 20 den letzten Streifen gedruckt hat (Zeitpunkt $t_3$) fährt er über das Ziel hinaus, bis der an der Rückseite der Druckkopfachse 21 montierte Pulverauftragsmechanismus auf die Befüllposition kommt (siehe Figur 1e)). Zuletzt wird die Plattform 10 um eine Schichtstärke abgesenkt (Zeitpunkt $t_4$). Der Vorgang kann erneut beginnen.

Damit sich Düsenfehler (= ausgefallene und/oder verstopfte Düsen) nicht als Trennebenen im Bauteil abbilden, wird der erste Streifen in der Position in Beschichterrichtung leicht variiert.

In der Figur 1 sind die Zusatzaggregate zum Warten des Druckkopfes 20 wie beispielsweise Reinigungsstation und Cappingstation sowie die Befülleinrichtung für den Beschichter 30 oder auch beispielsweise ein Druckkopf-Niveausensor, nicht dargestellt.

Berücksichtigt man Nebenzeiten wie zum Beispiel die Druckkopfreinigung oder das Druckkopfnachfüllen nicht, ergibt sich die Zeit T1 pro prozessierter Schicht beim Bidirektionaldruck als:

$$T1 = Tr1 \text{ (Beschichtungszeit)} + Trn1 \text{ (Nachfüllen des Beschichters)} + n$$

$$\times \text{ (Ts1 (Druckzeit pro Streifen)} + Tv1 \text{ (Versatzzeit))} + Ta \text{ (Absenken)}$$

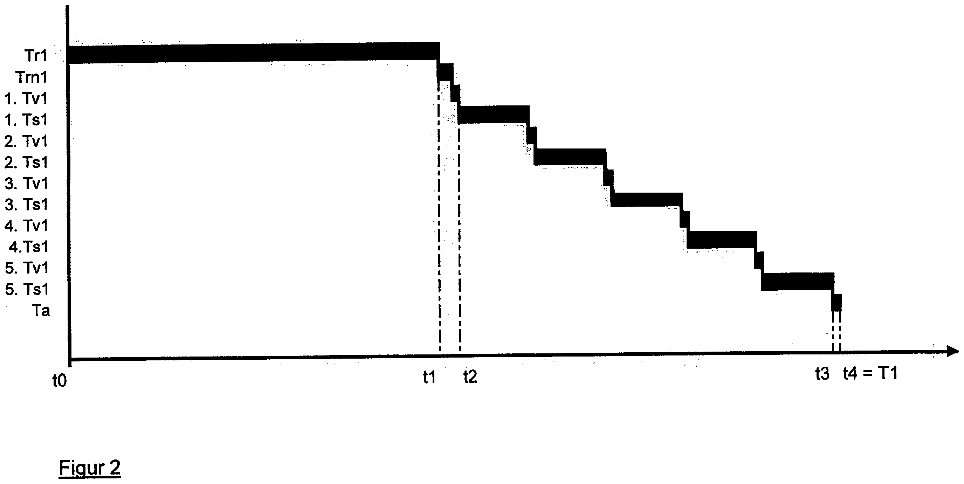

Dies ist in der Figur 2 in einem Diagramm dargestellt.

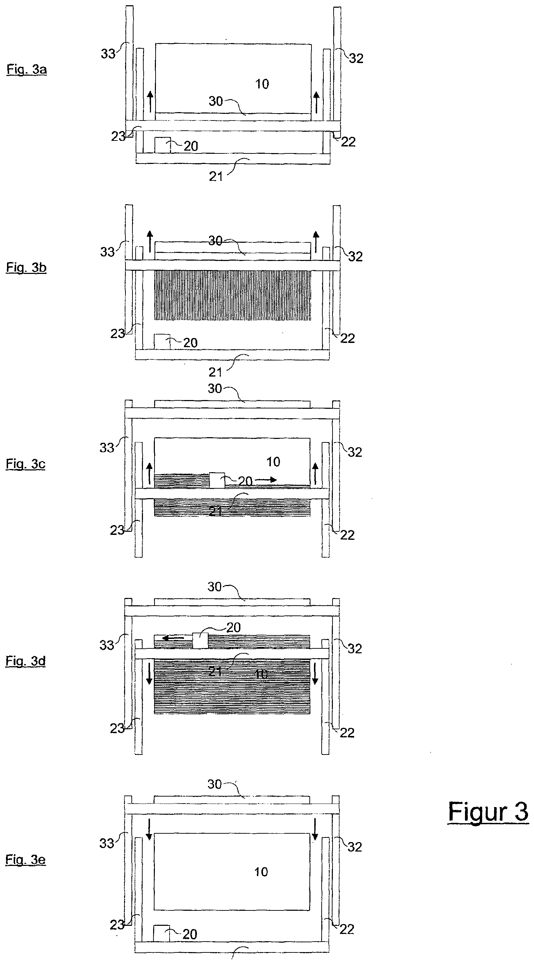

In einer weiteren bekannten Ausführungsform gemäß der Figur 3 verfahren Druckkopfachse 21 und Beschichter 30 auf getrennten Verfahreinheiten mit den jeweiligen Verfahrachsen 22, 23 und 32, 33. Dies hat den Vorteil, dass Nebenzeiten für den Druckkopf 20 nicht anfallen, da beispielsweise die Druckkopfreinigung während des Beschichtungsvorganges ablaufen kann oder Nebenzeiten für den Beschichter nicht anfallen, da beispielsweise das Nachfüllen während des Druckens stattfinden kann.

Die Zeit T2 pro Schicht lässt sich dann folgendermaßen berechnen:

$$T2 = Tl2 \text{ (Beschichterlehrfahrt)} + Tr2 \text{ (Beschichtungszeit)} + n \times \text{ (Ts2}$$

$$\text{(Druckzeit pro Streifen)} + Tv2 \text{ (Versatzzeit) )} + Ta \text{ (Absenken)}$$

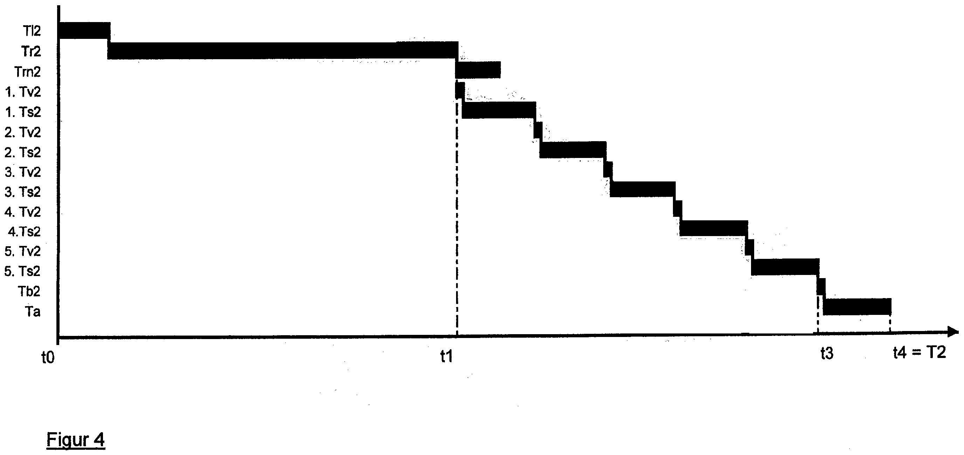

Dies ist in Figur 4 graphisch dargestellt.

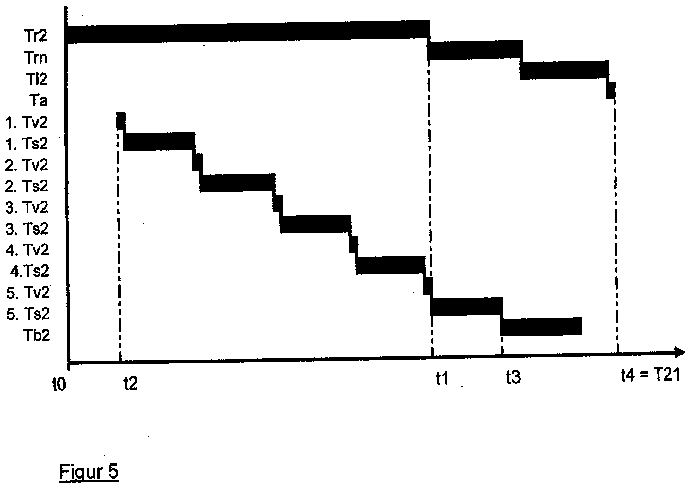

Im Idealfall lässt sich mit dieser Variante sogar ein Teil des Druckzyklus im Beschichtungsvorgang "verstecken" und damit Prozesszeit einsparen. Wenn die Gesamtdruckzeit kleiner als die Beschichtungszeit ist, ergibt sich die verkürzte Schichtzeit zu T21 = Tr2 + Trn2+ Tl2 + Ta, was in Figur 5 grafisch dargestellt ist.

Bei den Verfahrachsen 22, 23, 32, 33 der Verfahreinheiten bewähren sich häufig auch Kombinationen unterschiedlicher Ausführungsformen. So werden die schnellen Druckbewegungen, bei denen eine möglichst gleichbleibende Geschwindigkeit und ruhiger Lauf gefordert ist, überwiegend mit Achsen ausgeführt, die über Zahnriemen angetrieben werden. Als Motor werden vielfach Servoantriebe verwendet, die direkt oder über ein zwischengeschaltetes Getriebe an die Zahnriemenscheibe geflanscht werden. Damit die Schussimpulse für die einzelnen Düsen mit der Position auf dem Baufeld korrelieren, wird üblicherweise ein Linearencoder an der Achse während der Druckbewegung ausgewertet.

Für die genaue Positionsbewegung beim Versatz des Druckkopfes um eine Streifenbreite sb haben sich Linearachsen mit Kugelgewindetrieb als geeignet herausgestellt. Dabei reicht die Wiederholgenauigkeit der Spindeln aus, um mit einem angeflanschten Servo-Antrieb und dessen integrierten Drehgeber, die gewünschte Position mit ausreichender Genauigkeit anzufahren. Nachteilig bei diesen Achsen wirkt sich die durch die Spindel begrenzte maximale Verfahrgeschwindigkeit aus. Denn z.B. bei einer schnellen Rückholbewegungen limitiert die Achse die mögliche Geschwindigkeit.

Die Beschichter können sowohl mit Zahnriemenachsen als auch mit Spindeltrieben bewegt werden, da die möglichen Beschichtungsgeschwindigkeiten in der Regel relativ niedrig sind. Allerdings können auch hier Rückfahrten notwendig sein, die möglichst schnell ausgeführt werden sollten.

Neben den geschilderten Antrieben sind auch andere Varianten wie z.B. Linearantriebe oder Schritt- anstelle der Servo-Motoren denkbar.

Bei den oben genannten Beispielen werden üblicherweise Druckköpfe eingesetzt, deren Druckbreite und die damit mögliche Streifenbreite sb deutlich kleiner ist als die Breite des Baufeldes. Dieser Zusammenhang wird vornehmlich durch den hohen Aufwand und die damit verbundenen hohen Kosten begründet, der bei einer größeren Anzahl Düsen in etwa linear mit der Düsenzahl steigt.

In konkreten Zahlen ausgedrückt sind bei gewünschten 300 dpi Auflösung (84 $\mu$m) für eine Druckstreifenbreite von 100mm 1.181 Düsen erforderlich.

In jüngster Zeit haben sich die Kosten pro Düse jedoch deutlich reduziert, so dass auch größere Druckbreiten wirtschaftlich darstellbar werden.

Nichtsdestotrotz wurde immer weiter versucht, den Verfahrensablauf kostengünstiger und die Vorrichtung beim 3D-Drucken einfacher zu gestalten und dabei immer noch hohe Baugeschwindigkeiten und damit angemessene Wirtschaftlichkeit zu erzielen.

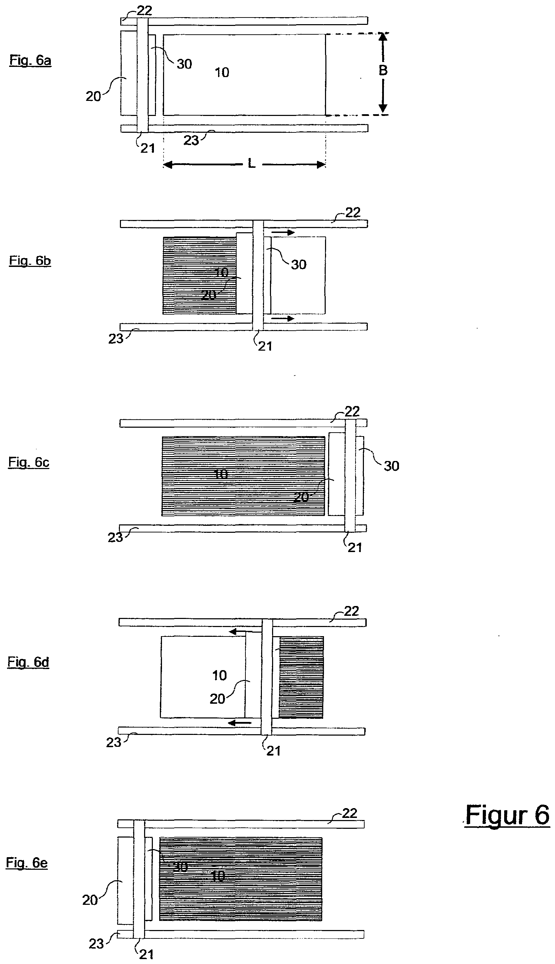

Es wurde nun also eine in der Figur 6 dargestellte Variante vorgeschlagen. Bei dieser gezeigten Ausführungsform weist der Druckkopf 20 eine Druckbreite auf, die etwas größer ist als die Breite B des Baufeldes 10. Der Druckkopf ist an einer Beschichtereinheit 30 befestigt und bewegt sich mit dieser ähnlich, wie bei der in der Figur 1 dargestellten Vorrichtung, gemeinsam mit dieser Beschichtereinheit 30 über das Baufeld 10.

Der Schichtvorgang startet bei der in der Figur 6 gezeigten Variante mit dem Beschichten des Baufeldes 10 über die lange Seite L. Anschließend wird der Beschichter 30 nachgefüllt. Dann verfährt die Druckkopfachse 21 in Druckposition und bedruckt das Baufeld 10 in einer Überfahrt.

Nachdem der Druckkopf 20 das Baufeld 10 überstrichen hat, wird er um einen kleinen Schritt in Richtung der kurzen Baufeldabmessung B versetzt, damit beim Bedrucken der nächsten Schicht gegebenenfalls auftretende Düsenfehler nicht zu überlagert werden. Diese Versatzbewegung des Druckkopfes 20 sollte mindestens um eine Düsenbreite erfolgen, noch besser ist es, wenn Druckkopf 20 um mehrere Teilungsschritte variabel verfahren werden kann. Dann ist es möglich, den Druckkopf 20 bei aufeinanderfolgenden Druckschichten unterschiedlich zu verfahren, womit Trennebenen und Düsenfehlern noch besser vorgebeugt werden kann. Die Verfahrbewegung des Druckkopfes 20 kann bei der gezeigten Ausführungsform über die schon oben beschriebenen Spindelachsen erfolgen, genauso sind aufgrund der geringen Wege auch Piezoantriebe denkbar. Danach wird das Baufeld um eine Schichtstärke abgesenkt und der Beschichtungsvorgang kann von Neuem beginnen.

Die Bauzeit ergibt sich bei einem derartigen Verfahren zu:

$$T3 = Tr3 + Trn3 + Ts3 + Tv3 + Ta.$$

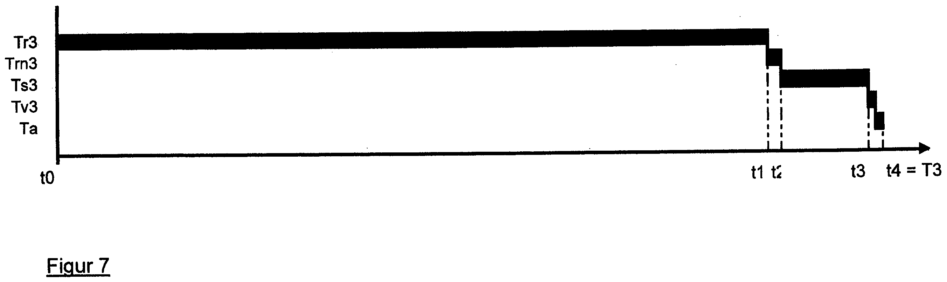

Eine grafische Darstellung hierzu findet sich in Figur 7.

Nicht berücksichtigt sind bei der Bauzeit allerding beispielsweise Zeiten für die Druckkopfreinigung. Diese gestaltet sich aber bei dieser

Ausführungsform relativ ungünstig, da der Bewegungsapparat ein Überstreichen aller Düsen z.B. über eine starre Gummilippe nur in Richtung der langen Baufeldabmessung L (X-Richtung) erlaubt. Das bedeutet, dass eine solche Gummilippe baufeldbreit sein müsste, was aus Gründen der Kantengenauigkeit der Lippe schwer darstellbar ist. Einfacher ist es, bei einer solchen Vorrichtung eine zusätzliche Achse zu integrieren, die die Reinigungslippe unter den Düsen in Y-Richtung verfährt und damit alle Düsen überstreicht. Diese Lippe kann dann deutlich schmäler ausfallen, ist allerdings mit dem Nachteil behaftet, dass die Vorrichtung eine zusätzliche Achse aufweist.

Um die Geschwindigkeit des Aufbauprozesses weiter zu erhöhen, ist es bekannt, dass der mit Bezug aus Figur 6 oben beschriebenen Einheit eine weitere Beschichtereinheit hinzugefügt wird, so dass die vollständige Prozessierung einer Schicht in jeweils einer Überfahrt möglich und ein Zurückfahren der Beschichtereinheit überflüssig wird.

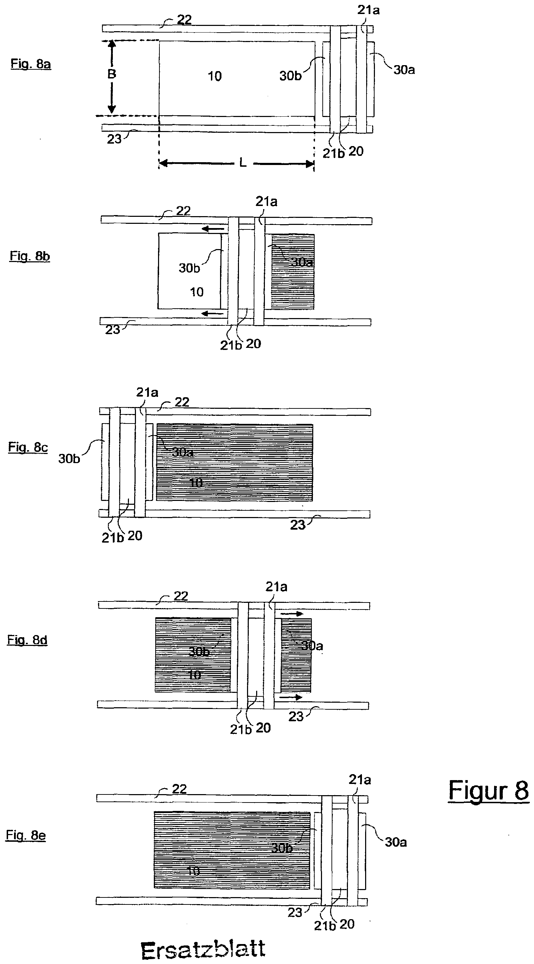

Eine solche Ausführungsform ist in Figur 8 gezeigt. Die Vorrichtung weist nun zwei Achsen 21a und 21b auf sowie zwei Beschichter 30a und 30b. Dies hat den Vorteil, dass der Druckkopf 20 bei jeder Überfahrt betrieben wird und nicht wie in Variante 3 beim Beschichten passiv mit fährt.

Die beiden Beschichter 30a und 30b befinden sich beidseitig des Druckkopfes 20 und werden wechselseitig je nach Verfahrrichtung betrieben.

Die Bauzeit ergibt sich bei dieser Ausgestaltung dann zu:

$$T4 = Tr4 + Trn4 + Tv4 + Ta$$

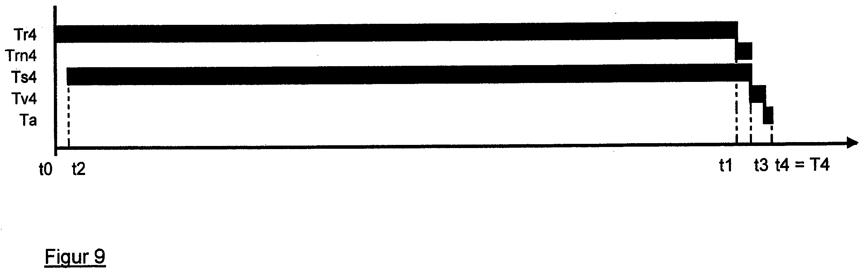

Grafisch ist dies wiederum in Figur 9 gezeigt.

Letztlich besteht die Bauzeit dann nur noch aus Beschichtungszeiten und ist damit nochmals kürzer als bei den anderen bisher beschriebenen Verfahren.

Der Verfahrweg der Drucker-Recoater-Einheit vergrößert sich gegenüber der mit Bezug auf Figur 6 beschriebenn Variante allerdings etwas, da beim Überstreichen in eine Richtung nicht nur der Druckkopf aus dem Baufeld bewegt werden muss, sondern auch der zweite, momentan nicht aktive Beschichter 30a bzw. 30b wieder auf Startposition gebracht werden muss.

Nachteilig wirkt sich bei dieser Variante der doppelte Aufwand für den Beschichter 30a und 30b zusammen mit der Notwendigkeit einer zweiten Pulverversorgung aus. Desweiteren ist die Zugänglichkeit des Druckkopfes 20 durch die beiden montierten Beschichter 30a, 30b deutlich erschwert.

Bei der in der Figur 8 gezeigten Vorrichtung wird während der Beschichtung gedruckt, wobei Drucker 20 und Beschichter 30a, 30b auf einer Einheit montiert sind. Dabei können sich Schwingungen vom Beschichter 30a, 30b auf den Druckkopf 20 auswirken und zu einer Verschlechterung des Druckbildes führen.

Zudem muss jeweils der gerade passive Beschichter 30a beziehungsweise 30b angehoben werden, um nicht im Kontakt mit der aktuellen Schicht zu sein und so das gerade aufgebrachte Druckbild zu beschädigen. Dazu ist eine steife und zuverlässige vertikale Bewegungseinheit auf beiden Beschichtern 30a, 30b notwendig.

Nicht zuletzt tritt hier wie bei der in der Figur 6 gezeigten Variante die Schwierigkeit auf, eine einfache Druckkopfreinigung beizustellen. Bei der in Figur 8 gezeigten Variante wirkt sich zudem erschwerend aus, dass stets ein Beschichter 30a, 30b die Druckkopfreinigung überqueren muss, bevor der Druckkopf 20 in Reinigungsposition gelangt. Dabei kann Partikelmaterial auf die Reinigungseinheit fallen und diese verschmutzen.

Ausgehend hiervon ist es daher Aufgabe der vorliegenden Erfindung ein schnelles und dabei einfaches und kostengünstiges Verfahren beziehungsweise eine einfache und kostengünstige Vorrichtung bereitzustellen.

Diese Aufgabe wird durch ein Verfahren gemäß dem Patentanspruch 1 und eine Vorrichtung gemäß Patentanspruch 5 gelöst.

Gemäß der vorliegenden Erfindung ist es bei einem Verfahren nach Anspruch 1 zum Herstellen dreidimensionaler Modelle mittels Schichtauftragstechnik, bei dem fluides Baumaterial auf ein Baufeld aufgetragen wird und anschließend über einen Drucker Bindermaterial selektiv auf das Baumaterial aufgetragen

Weiterhin wird die Aufgabe durch eine Vorrichtung zum Herstellen dreidimensionaler Modelle mittels Schichtauftragstechnik, wobei Mittel zum Auftragen fluiden Baumaterials auf ein Baufeld vorgesehen sind und mindestens ein Druckkopf zum selektiven Auftrag von Bindermaterial auf das Baumaterial vorgesehen ist, gelöst, bei der eine Druckbreite des Druckkopfes in etwa der halben Baufeldlänge entspricht.

Durch die Verwendung eines Druckkopfes, der in etwa der halben Baufeldlänge entspricht, kann eine einfache und kostengünstige Vorrichtung erzielt werden.

Weitere vorteilhafte Ausgestaltungen ergeben sich aus den Unteransprüchen und den nachfolgend beschriebenen Ausführungsbeispielen.

Gemäß der Erfindung wird das Verfahren derart ausgeführt, dass der erste und der zweite Teil des Baufeldes im wesentlichen eine Hälfte der Baufeldlänge betragen. Bei einer derartigen Ausgestaltung des erfindungsgemäßen Verfahrens kann der Druckkopf bei sehr hoher Baugeschwindigkeit eine möglichst geringe Druckbreite aufweisen.

Gute Ergebnisse konnten auch erzielt werden, wenn bei einem erfindungsgemäßen Verfahren das Baufeld eine im Wesentlichen rechteckige Form aufweist und der Drucker über eine kurze Seite der Baufeldplattform verfahren wird.

Es ist auch möglich zusätzlich, Zeit bei einem erfindungsgemäßen Verfahren einzusparen, wenn der Drucker zum Bedrucken des ersten Teils in eine Richtung verfahren wird und zum Bedrucken des zweiten Teils in eine andere Richtung verfahren wird.

Darüberhinaus kann es auch vorteilhaft sein, wenn ein Beschichter zum Auftragen des fluiden Baumaterials auf das Baufeld zumindest teilweise gleichzeitig mit dem Drucker über das Baufeld verfahren wird.

Bei einer Vorrichtung gemäß der vorliegenden Erfindung kann gemäß einer bevorzugten Ausführungsform an einer Umkehrposition des Druckkopfes eine Reinigungsstation für den Druckkopf vorgesehen sein. Eine solche Ausgestaltung hätte den Vorteil, dass der Druckkopf in einer Umkehrposition auf einfache Weise gereinigt werden kann.

Darüberhinaus wäre es zudem denkbar, dass an einer anderen Umkehrposition des Druckkopfes eine Befüllungsvorrichtung für den Beschichter vorgesehen ist. Eine solche Ausgestaltung wäre deshalb von Vorteil, da dies einen einfachen Aufbau und sowohl für die Reinigungsstation als auch die Befüllvorrichtung eine gute Zugänglichkeit für den Bediener gegeben ist.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:

Figur 1 ein aus dem Stand der Technik bekanntes Verfahren;

Figur 2 eine grafische Darstellung der Schichtzeiten gemäß dem Verfahren von Figur 1;

Figur 3 ein weiteres aus dem Stand der Technik bekanntes Verfahren;

Figur 4 eine grafische Darstellung der Schichtzeiten gemäß einem Verfahren von Figur 3;

Figur 5 eine weitere grafische Darstellung der Schichtzeiten gemäß einem weiteren Verfahren von Figur 3;

Figur 6 ein weiteres aus dem Stand der Technik bekanntes Verfahren;

Figur 7 eine grafische Darstellung der Schichtzeiten gemäß dem Verfahren von Figur 6;

Figur 8 ein noch weiteres aus dem Stand der Technik bekanntes Verfahren;

Figur 9 eine grafische Darstellung der Schichtzeiten gemäß dem Verfahren von Figur 8;

Figur 10 eine bevorzugte Ausführungsform eines Verfahrens gemäß der vorliegenden Erfindung;

Figur 11 eine grafische Darstellung der Schichtzeiten gemäß einem Verfahren von Figur 10;

Figur 12 eine grafische Darstellung der Schichtzeiten gemäß einem weiteren Verfahren von Figur 10;

Figur 13 eine Reinigungsstation für eine Vorrichtung zum Durchführen eines Verfahrens gemäß der Erfindung;

Figur 14 eine Düsenplatte eines Druckkopfes in Draufsicht; und

Figur 15 ein vergrößerter Ausschnitt der Düsenplatte von Figur 14.

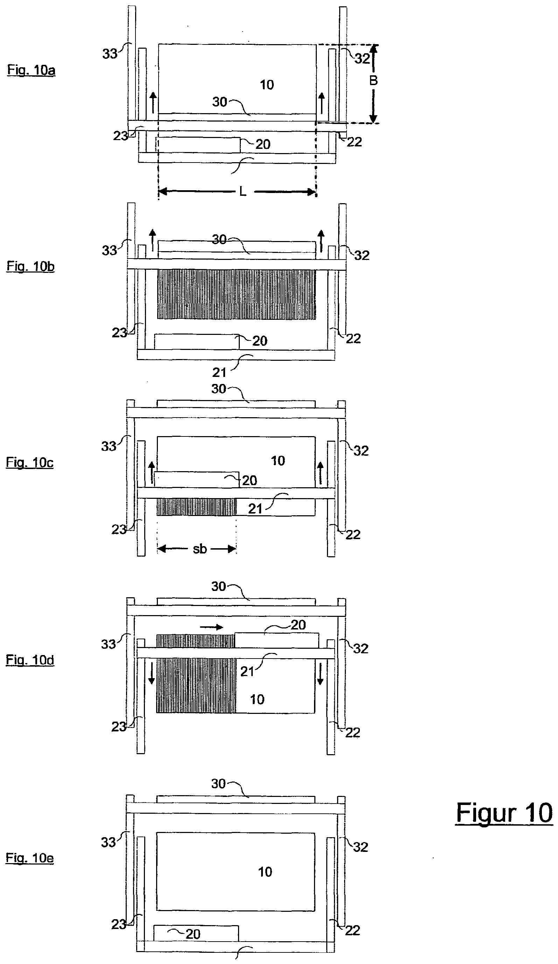

Mit Bezug aus Figur 10 wird eine bevorzugte Ausführungsform der vorliegenden Erfindung beschrieben. Bei der gezeigten Ausführungsform wird ein Druckkopf 20 mit einer etwas größeren Breite als die halbe Baufeldlänge L eingesetzt.

Der Druckkopf 20 und der Beschichter 30 verfahren ähnlich wie in der mit Bezug auf Figur 3 beschriebenen Variante getrennt über das Baufeld. Entgegen der mit Bezug auf Figur 3 beschriebenen Variante findet gemäß der gezeigten bevorzugten Ausführungsform der Erfindung die Druckbewegung aber in Richtung der kurzen Baufeldseite in Richtung der Baufeldbreite B statt.

Bei dem gezeigten bevorzugten Verfahren wird mit einer Beschichterfahrt über das Baufeld 10 gestartet, um eine Pulverlage abzulegen. Dies ist in Figur 10a) und 10b) dargestellt. Daran anschließend wird, während der Beschichter 30 nachgefüllt wird, der Druckkopf 20 zunächst über eine erste Hälfte des Baufeldes 10 bewegt, um dieses zu bedrucken (Figur 10c)). Dann wird der Druckkopf 20 um die Druckerbreite versetzt und startet seinen zweiten Druckvorgang über der zweiten Hälfte des Baufeldes 10 (Figur 10d) und 10e)). Dem Drucker 20 eilt dann der Beschichter 30 nach, um wieder in die Ausgangslage zu kommen. Zuletzt wird das Baufeld 10 um eine Schichtstärke abgesenkt und der Vorgang kann von Neuem beginnen.

Bei einem derartigen Verfahren gemäß der vorliegenden Erfindung ergibt sich die Schichtzeit dann zu:

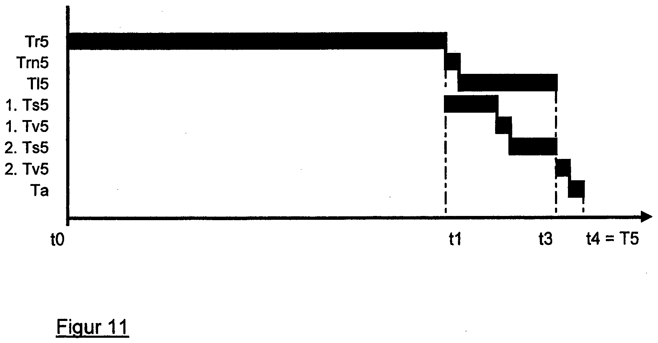

T5 = Tr5 + Trn5 + Tl5 + Tv5 + Ta, was in der Figur 11 auch grafisch dargestellt ist.

Ist bei einem gezeigten erfindungsgemäßen Verfahren gemäß einer bevorzugten Ausführungsform die Beschichtungszeit Tr5 gleich lang oder länger als die Druckzeit Ts5, dann kann der Ablauf des Verfahrens noch weiter optimiert werden. Dies kann dabei derart erfolgen, dass die erste der beiden Druckfahrten starten, wenn der Beschichter 30 sich noch über dem Baufeld 10 befindet. Die Leerfahrzeit des Beschichters 30 kann dann so angepasst werden, dass sich die Schichtzeit wie folgt verkürzt:

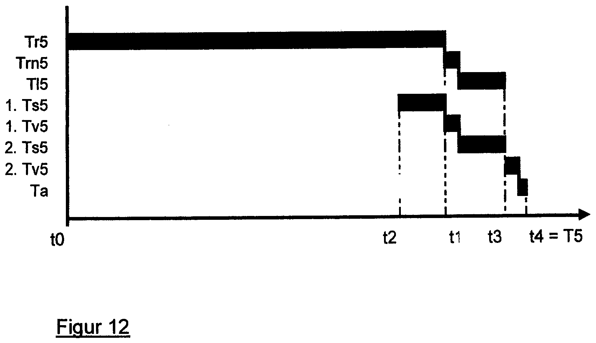

T51 = Tr5 + Tv5 + Ts5 +Tv5 +Ta, was auch in der Figur 12 grafisch dargestellt ist.

Das gezeigte erfindungsgemäße Verfahren weist gegenüber dem in der Figur 6 und Figur 8 beschriebenen Stand der Technik die Vorteile auf, dass sich ein im wesentlichen gleicher Achs-Aufbau wie in den mit Bezug auf Figur 1 und 3 beschriebenen Varianten ergibt.

Es kann dabei vorteilhaft sein, wenn für die Druckkopfachse 21 eine positioniergenaue Spindelachse verwendet wird.

Die Druckstartposition des Druckkopfes 20 auf dem Baufeld soll vorteilhafterweise in Richtung der Baufeldlänge pro Schicht leicht innerhalb einer Variationsbreite variieren, um eine Überlagerung eventueller Düsenausfälle zu verhindern und damit Trennebenen im Modell zu vermeiden. Dazu muss die Druckbreite Sb mindestens um die Variationsbreite des Startpunktes größer sein als die halbe Baufeldlänge L.

Die Variationsbreite sollte mehrere Düsenabstände groß sein, um wirksam zu werden. Bei einer Druckbreite sb von 400 mm kann die Variationsbreite z.B. 20 mm betragen. Vorteilhafterweise sollte der jeweils pro Schicht gewählte Versatz der Druckstartposition ein ungeradzahliges Vielfaches des Düsenabstandes in Druckrichtung sein.

Darüberhinaus kann vorteilhaftweise ein Maßstabssystem zur Positionsdetektion an eine der Achsen 22 oder 23 gesetzt werden, um die Schussimpulse für den Druckkopf auf die aktuelle Position über dem Baufeld 10 zu triggern. Mit solchen Veränderungen kann ein Aufbau wie in den mit Bezug auf Figur 1 und 3 beschrieben Varianten relativ einfach umgerüstet werden, um zu einem beschrieben erfindungsgemäßen Verfahren zu gelangen.

Einer Druckkopfreinigung kann bei einer Vorrichtung, die zur Durchführung eines erfindungsgemäßen Verfahrens verwendet wird, beispielsweise mit einer stehenden Gummilippe erfolgen, da die Apparatur eine Bewegungsmöglichkeit des Druckkopfes in Richtung der Baufeldlänge L über die gesamte Druckbreite zulässt.

Die Zugänglichkeit zu Beschichter 30 und Druckkopf 20 sind dabei sehr gut.

Gemäß einer bevorzugten Ausführungsform der Erfindung weist das Baufeld eine rechteckige Form auf und der Drucker wird über die kurze Baufeldseite verfahren.

Um die Verbesserung durch die Erfindung gemäß einer solchen Ausführungsform im Vergleich zum Stand der Technik nochmals genauer zu beschreiben, werden im Folgenden die Prozesszeiten von gemäß dem mit Bezug auf Figur 12 beschrieben Verfahren mit der mir Bezug auf Figur 8 beschriebenen Variante des Standes der Technik verglichen.

Nimmt man hierzu an, dass die Zeiten für den Druckkopfversatz, das Nachfüllen des Beschichters und das Schichtabsenken im Vergleich zur

Beschichtungszeit und zum Drucken wesentlich kleiner sind, können diese vernachlässigt werden.

Die Schichtzeiten lauten dann wie folgt:

$$T51 = Tr5 + Ts5$$

$$T4 = Tr4$$

Bei gleichen Beschichtungsgeschwindigkeiten, gleichen Baufeldabmessungen und unter Vernachlässigung der kurzen Beschleunigungszeiten kann folgender Zusammenhang gefunden werden:

$$Tr4 = L / B \times Tr5$$

Weiterhin gilt, dass die Beschichtungszeit um einen konstanten Faktor für eine gleiche zu überwindende Strecke länger ist als die Druckzeit:

$$Tr5 = c \times Ts5$$

Unter diesen Bedingungen kann eine Regel gefunden werden, für die Variante gemäß Figur 12 kürzere Schichtzeiten erlaubt als die mit Bezug auf Figur 8 beschriebene Variante:

$$T51 < T4$$

$$Tr5 + Ts5 < T4$$

$$Tr5 + Tr5 / c < L / B \times Tr5$$

$$(1 + 1/ c) \times B < L$$

Die Formel kann mit einfachen Zahlenbeispielen überprüft werden.
Ist die Beschichtungsgeschwindigkeit gleich der Druckgeschwindigkeit gilt: c = 1

In diesem Fall sollte die Baufeldlänge Lgrößer als die doppelte Breite Bsein, damit die Variante gemäß Figur 12 gegenüber der Variante gemäß Figur 8 schneller ist.

Bei einem üblichen Geschwindigkeitsverhältnis von 1:2 gilt c = 2.
Dann muss die Baufeldlänge nur noch 1,5 mal größer sein als die Baufeldbreite, damit die Variante gemäß Figur 12 gegenüber der Variante gemäß Figur 8 schneller ist.

Bei einer solchen Ausführungsform ist es dann also möglich, bei einfacherem Aufbau der Vorrichtung, einen schnelleren Modellaufbau zu erzielen.

Ein weiterer Vorteil der Erfindung ist ein geringerer Maschinenverschleiß an den Druckachsen und Antrieben gegenüber z.B. der Ausführungsform gemäß Figur 1 aufgrund deutlich kleinerem Druckweg pro Schicht und geringerer Anzahl an Beschleunigungszyklen.

Im Folgenden sollen die gemäß der beschriebenen bevorzugten Ausführungsform verwendeten On demand Druckköpfe noch etwas genauer beschrieben werden. Diese verfügen über offene Düsen, die, falls einzelne Düsen über einen gewissen Zeitraum ungenutzt sind, eintrocknen oder auf andere Weise verstopfen können. Derartige Düsenausfälle führen mindestens zu Abbildungsfehlern im späteren Bauteil beziehungsweise können bei entsprechender Häufung das Bauteil ganz zerstören. Es ist daher notwendig, den Druckkopf in gewissen Abständen zu reinigen und so dafür zu sorgen, dass eventuell verstopfte Düsen wieder frei werden.

Dazu werden verschiedene Verfahrensschritte genutzt, die aus dem 2D-Druck bekannt sind. Die einfachste Methode ist, anstelle des Unterdrucks, der am Binder-Reservoir anliegt und dafür sorgt, dass im Stillstand kein Binder aus den Düsen austritt, einen Überdruck anzulegen.

Dieser Druck sorgt dafür, dass Binder aus den Düsen tropft und eingetrocknetes Material oder andere Verunreinigungen mit schwemmt. Der Druckkopf sollte für diesen Vorgang über einem Auffangbecken stehen, da relativ große Mengen Binder abtropfen. Bei diesem Vorgang bleiben in der Regel Bindertropfen an der Düsenplatte haften, die wiederum den normalen Druckbetrieb stören. Es ist daher notwendig, diese Tropfen z.B. mittels einer über die Düsenplatte streichenden Gummilippe oder einen Schwamm abzuziehen. Wird ein Schwamm verwendet, bietet es sich an, diesen mit einem Lösungsmittel zu tränken, um weitere Verunreinigungen an der Düsenplatte zu entfernen. Um sicher zu stellen, dass sich nach dem Abziehen mit dem Schwamm kein Lösungsmittel in den Düsen befindet, wird der Druckkopf kurzzeitig mit allen Düsen betrieben. Letzte Reste des Lösungsmittels werden so aus den Düsen entfernt. Nach dieser Prozedur ist der Druckkopf wieder einsatzbereit.

Für die Druckqualität wäre eine möglichst häufige Reinigung (z.B. jede Schicht) vorteilhaft. Allerdings kostet die Reinigung Prozesszeit, Binder und evtl. Lösungsmittel. Aus diesen Gründen sollte so wenig wie möglich gereinigt werden. Es hat sich herausgestellt, dass ein Reinigungsvorgang alle 5 - 50 Schichten erfolgen sollte.

Zweckmäßigerweise ist die Reinigungsstation so aufgebaut, dass alle Prozessschritte nacheinander ablaufen können und die Relativbewegung zwischen Druckkopf und Gummilippe und/oder Schwamm alleine von der Verfahrachse des Druckkopfes durchgeführt wird. Aus Platzspargründen sollte die Reinigungsstation möglichst nahe am Baufeld platziert sein, um unnötige Leerfahrten des Druckkopfes zu vermeiden. Im besten Fall liegt die Reinigungsstation in einem Bereich, den der Druckkopf z.B. aufgrund des Streifenversatzes bei jeder Schicht überstreichen muss. D.h. der Druckkopf führt dann keine zeitkostenden Zusatzbewegungen aus.

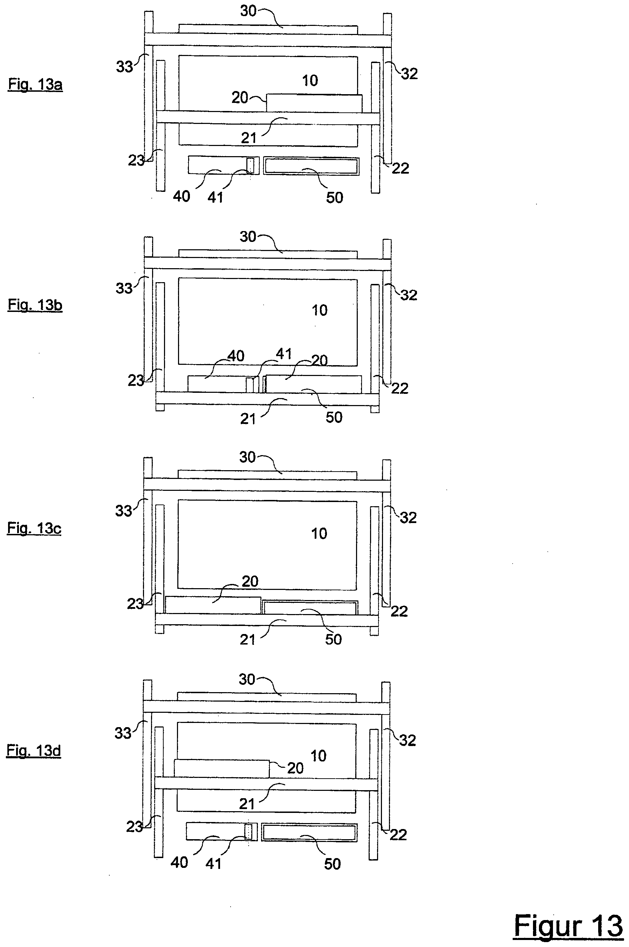

Figur 13a) zeigt beispielhaft in der Draufsicht eine derartige Position der Reinigungsstation im vorderen Bereich der Anlage. Die Reinigungsstation besteht dabei aus einem Becken 40, das den gesamten Düsenbereich überdeckt, um den Binder beim Betrieb aller Düsen nach dem Abziehen der Düsenplatte aufzufangen. Zur Anlagenmitte orientiert befindet sich die Wischlippe 41 in dem Becken 40. Die Lippe 41 ist so angeordnet, dass die Düsen die Lippe 41 bei der Druckstreifenversatzbewegung überstreichen und die Lippe gleichmäßig an die Düsenplatte gedrückt wird. Des weiteren kann die Lippe 41 zur Relativbewegung zwischen Lippe 41 und Druckkopf 20 leicht angestellt sein (nicht dargestellt), um den Binder von den Düsen weglaufen zu lassen. Damit die Reinigungsstation während der Schichten, bei denen nicht gereinigt werden soll, nicht den Druckbetrieb stört, ist es notwendig, dass die Lippe 41 den Druckkopf 20 dann nicht kontaktiert. Dies kann z.B. über einen Schwenkmechanismus erfolgen, der die Lippe 41 während dieser Phasen in das Becken 40 absenkt.

In Figur 13b befindet sich der Druckkopf nun über der Cappingposition. Es findet nun der erste Reinigungsschritt mit dem Überdruckspülen statt. In der vorliegenden Bauform ist die Cappingstation mit einer Wanne 50 zum Aufnehmen des abtropfenden Binders beim Überdruckspülen ausgestattet.

Zwischen Figur 13b und 13c fährt die Druckkopfachse 21 den Druckkopf 20 über die Reinigungslippe 41. Restliche Bindertropfen und Verschmutzungen werden dadurch abgewischt. Der Druckkopf befindet sich jetzt in der Vollbetriebszone. Hier werden kurzzeitig alle Düsen betrieben, der Binder tropft in die Reinigungswanne 40. Der Druckkopf 20 ist anschließend gereinigt und kann den 3D-Druck wieder aufnehmen (Figur 13d).

Nach Prozessende wird ein Austrocknen der Düsen durch eine sogenannte Cappingstation verhindert. Dazu fährt der Druckkopf 20 in die Cappingposition (siehe Figur 13b). Anschließend wird die Düsenplatte des Druckkopfes 20 abgedichtet. Dies erfolgt z.B. mittels einer Dichtwanne, die an die Rändern an der Düsenplatte gepresst wird, dabei aber die Düsen nicht berührt. Zwischen Boden der Dichtwanne und Düsen ist dann ein kleiner abgeschlossener Luftraum. Eine andere Möglichkeit ist die Verwendung eines Schwamms, der sich in der Wanne befindet und mit Lösungsmittel oder einem speziellen Feuchthaltemittel feucht gehalten wird. Der Schwamm liegt in Cappingposition an der Düsenplatte an.

In beiden Ausführungsformen wird der Druckkopf 20 auf eine Ruheposition über der Wanne 50 gefahren und die Dichtwanne über einen Hebemechanismus an den Druckkopf gepresst. Hierbei ist darauf zu achten, dass die Ausführung des Mechanismus gleichmäßiges Anlegen der Dichtung an die Düsenplatte ermöglicht. Im Druckbetrieb ist die Dichtwanne hingegen in einer zurückgezogenen Position. Vorteilhafterweise ist die Dichtwanne in der zurückgezogenen Position derart abgedeckt, dass keine Verschmutzungen z.B. in Form von Partikelmaterial in die Dichtwanne fallen können.

Am Markt erhältliche Druckmodule weisen kleinere Abmessungen auf, als für den Druck eines halben Baufeldes notwendig. Deshalb werden die Module zu einem größeren Druckkopf zusammengestellt.

Die Anordnung ist dabei so zu wählen, dass die Düsen über die einzelnen Module hinweg in exakter Teilung stehen. Daneben soll der Druckkopf möglichst klein bauen, um die Anlage insgesamt klein halten zu können.

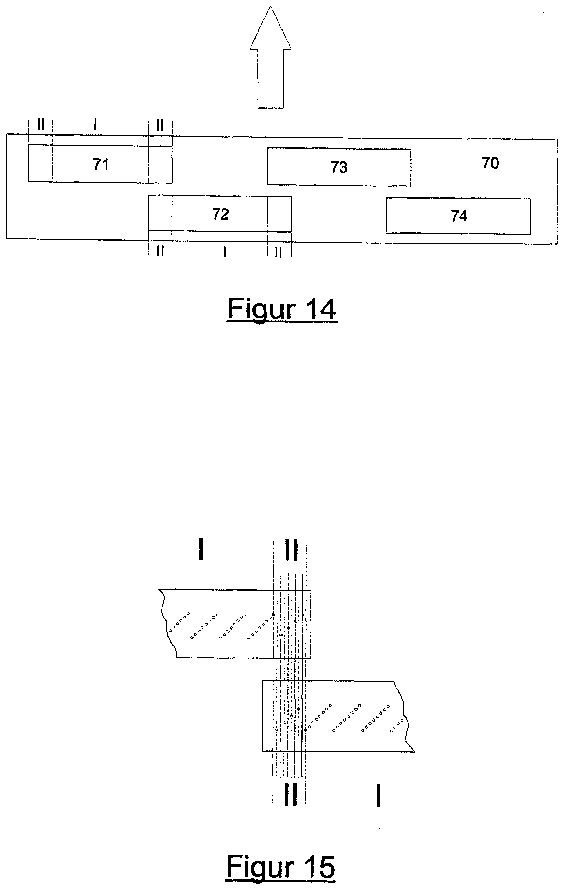

In Figur 14 ist die Draufsicht auf die Düsenplatte 70 eines Druckkopfes 20 zu sehen, der aus vier Druckmodulen 71, 72, 73, 74 aufgebaut ist. Der Pfeil gibt die Druckrichtung wieder. Jedes der Druckmodule 71, 72, 73, 74 weist einen Bereich I auf, der über eine vollständige Druckauflösung verfügt. Am jeweils linken und rechten Rand der Druckmodule 71, 72, 73, 74 finden sich dann Bereiche II, die über eine reduzierte Druckauflösung verfügen. Die Druckmodule 71, 72, 73, 74 sind so gemäß der gezeigten Ausführungsform derart angeordnet, dass sich z.B. der Bereiche II rechts des Moduls 71 und der Bereich II links des Moduls 72 überdecken. Der Abstand der beiden Module 71 und 72 ist dabei so gewählt, dass in dem Überdeckungsbereich wieder die volle Auflösung erreicht wird (siehe Figur 15). Das Gleiche gilt für die weiteren Module.

Bezugszeichenliste

| | |
|---|---|
| 10 | Baufeld |
| 20 | Druckkopf |
| 21, 21a, 21b | Druckkopfachse |
| 22 | Verahrachse |
| 23 | Verfahrachse |
| 30, 30a, 30b | Beschichter |
| 32 | Verfahrachse |
| 33 | Verfahrachse |
| 40 | Reinigungsbecken |
| 41 | Wischlippe |
| 50 | Wanne |
| 70 | Düsenplatte |
| 71, 72, 72, 74 | Düsenmodule |

**Patentansprüche**

1. Verfahren zum Herstellen dreidimensionaler Modelle mittels Schichtauftragstechnik, wobei fluides Baumaterial auf ein Baufeld aufgetragen wird und anschließend über einen Drucker Bindermaterial selektiv auf das Baumaterial aufgetragen wird, **dadurch gekennzeichnet, dass** nach Aufbringen des fluiden Baumaterials bei einem ersten Verfahren eines Druckkopfes (20) geringerer Druckbreite als der Länge des Baufeldes (10) über das Baufeld (10) im wesentlichen eine erste Hälfte der Länge des Baufeldes (10) bedruckt wird und bei einem zweiten Verfahren des Druckkopfes (20) über das Baufeld (10) der Druckkopf (20) versetzt wird und im wesentlichen eine zweite Hälfte der Länge des Baufeldes (10) bedruckt wird, wobei der Druckkopf (20) nach dem ersten Verfahren um die Druckerbreite (sb) versetzt wird und die zweite Hälfte der Länge des Baufeldes (10) bedruckt wird.

2. Verfahren nach einem der vorhergehenden Ansprüche, **dadurch gekennzeichnet, dass** das Baufeld (10) eine im Wesentlichen rechteckige Form aufweist und der Druckkopf (20) beim Bedrucken des Baufeldes (10) über eine kurze Seite der Baufeldplattform verfahren wird.

3. Verfahren nach einem der vorhergehenden Ansprüche, **dadurch gekennzeichnet, dass** der Druckkopf (20) zum Bedrucken der ersten Hälfte in eine Richtung verfahren wird und zum Bedrucken der zweiten Hälfte in eine andere Richtung verfahren wird.

4. Verfahren nach einem der vorhergehenden Ansprüche, **dadurch gekennzeichnet, dass** ein Beschichter (30) zum Auftragen des fluiden Baumaterials auf das Baufeld (10) zumindest teilweise gleichzeitig mit dem Druckkopf (20) über das Baufeld (10) verfahren wird.

5. Vorrichtung zum Herstellen dreidimensionaler Modelle mittels Schichtauftragstechnik gemäß Anspruch 1, wobei Mittel zum Auftragen fluiden Baumaterials auf ein Baufeld (10) vorgesehen sind und ein Druckkopf (20) zum selektiven Auftrag von Bindermaterial auf das Baumaterial vorgesehen ist, wobei eine Druckbreite (sb) des Druckkopfes (20) in etwa der halben Baufeldlänge entspricht.

6. Vorrichtung nach Anspruch 5, **dadurch gekennzeichnet, dass** das Baufeld (10) eine im Wesentlichen rechteckige Form aufweist und der Druckkopf (20) derart angeordnet ist, dass er über eine kurze Seite der Baufeldplattform verfahren wird.

**7.** Vorrichtung nach Anspruch 5 oder 6, **dadurch gekennzeichnet, dass** an einer Umkehrposition des Druckkopfes (20) eine Reinigungsstation für den Druckkopf (20) vorgesehen ist.

**8.** Vorrichtung nach Anspuch 7, dadurch geknnzeichnet dass an einer anderen Umkehrposition des Druckkopfes (20) eine Befüllungsvorrichtung für den Beschichter (30) vorgesehen ist.

**Claims**

**1.** A method for the production of three-dimensional models by means of a layer application technique, wherein fluid construction material is applied onto a construction field and then a binder material is selectively applied onto the construction material by a printer, **characterised in that** after application of the fluid construction material, substantially a first half of the length of the construction field (10) is printed on during a first displacement of a print head (20) over the construction field (10), the printing width of said print head (20) being smaller than the length of the construction field (10), and during a second displacement of the print head (20) over the construction field (10) the print head (20) is offset and substantially a second half of the length of the construction field (10) is printed on, wherein the print head (20) is staggered by the printing width (sb) after the first displacement and the second half of the length of the construction field (10) is printed on.

**2.** The method according to any one of the preceding claims, **characterised in that** the construction field (10) has a substantially rectangular shape and the print head (20) for printing on the construction field (10) is displaced over a short side of the construction field platform.

**3.** The method according to any one of the preceding claims, **characterised in that** the print head (20) is displaced in one direction for printing on the first half and is displaced in another direction for printing on the second half.

**4.** The method according to any one of the preceding claims, **characterised in that** a coater (30) for applying the fluid construction material onto the construction field (10) is displaced over the construction field (10) at least partly simultaneously with the print head (20).

**5.** A device for producing three-dimensional models by means of a layer application technique according to claim 1, wherein means are provided for applying fluid construction material onto a construction field (10) and a print head (20) is provided for selectively applying binder material onto the construction material, wherein a printing width (sb) of the print head (20) corresponds to approximately half the construction field length.

**6.** The device according to claim 5, **characterised in that** the construction field (10) has a substantially rectangular shape and the print head (20) is arranged so as to be displaced over a short side of the construction field platform.

**7.** The device according to claim 5 or 6, **characterised in that** a cleaning station for the print head (20) is provided at a reversing position of the print head (20).

**8.** The device according to claim 7, **characterised in that** at another reversing position of the print head (20) a filling means for the recoater (30) is arranged for.

**Revendications**

**1.** Procédé de production de maquettes tridimensionnelles par une technique d'application couche par couche, dans lequel on applique de la matière de construction fluide sur un champs de construction et puis du matériau liant est appliqué de manière sélective sur ladite matière de construction par une imprimante, **caractérisé en ce qu'**après l'application de la matière de construction fluide, sensiblement une première moitié de la longueur du champs de construction (10) est imprimée lors d'un premier déplacement d'une tête d'impression (20) sur le champ de construction (10), la largeur d'impression de ladite tête d'impression (20) étant inférieure à la longueur du champs de construction (10), et lors d'un deuxième déplacement de la tête d'impression (20) sur le champs de construction (10) la tête d'impression (20) est décalée, sensiblement imprimant une deuxième moitié de la longueur du champs de construction (10), la tête d'impression (20) étant décalée par la largeur d'impression (sb) après son premier déplacement et imprimant la deuxième moitié de la longueur du champs de construction (10).

2. Procédé selon l'une quelconque des revendications précédentes, **caractérisé en ce que** le champs de construction (10) présente une forme sensiblement rectangulaire et la tête d'impression (20) est déplacée, lors de l'impression du champs de construction (10), sur un côté court de la plateforme de ce dernier.

3. Procédé selon l'une quelconque des revendications précédentes, **caractérisé en ce que** la tête d'impression (20) est déplacée dans une direction pour imprimer la première moitié et dans une autre direction pour imprimer la deuxième moitié.

4. Procédé selon l'une quelconque des revendications précédentes, **caractérisé en ce qu'**un enducteur (30) est déplacé, au moins partiellement en même temps que la tête d'impression (20), sur le champs de construction (10) pour appliquer la matière de construction fluide sur le champs de construction (10).

5. Dispositif de production de maquettes tridimensionnelles par une technique d'application couche par couche selon la revendication 1, dans lequel on prévoit des moyens pour appliquer de la matière de construction fluide sur un champs de construction (10) et on prévoit une tête d'impression (20) pour l'application sélective de matériau liant sur la matière de construction, une largeur d'impression (sb) de la tête d'impression (20) correspondant environ à la moitié de la longueur du champs de construction.

6. Dispositif selon la revendication 5, **caractérisé en ce que** le champs de construction (10) présente une forme sensiblement rectangulaire et la tête d'impression (20) est disposée de manière à être déplacée sur un côté court de la plateforme du champs de construction.

7. Dispositif selon la revendication 5 ou 6, **caractérisé en ce que** l'on prévoit une station de nettoyage de la tête d'impression (20) à une position de retour de la tête d'impression (20).

8. Dispositif selon la revendication 7, **caractérisé en ce que** un moyen à réassortir pour un enducteur (30) est arrangé à une autre position de retour de la tête d'impression (20).

Fig. 1a

Fig. 1b

Fig. 1c

Fig. 1d

Fig. 1e

**Figur 1**

Ersatzblatt

12

EP 2 504 154 B1

Figur 2

Fig. 3a

Fig. 3b

Fig. 3c

Fig. 3d

Fig. 3e

## Figur 3

Figur 4

Figur 5

EP 2 504 154 B1

Fig. 6a

Fig. 6b

Fig. 6c

Fig. 6d

Fig. 6e

### Figur 6

Figur 7

EP 2 504 154 B1

Fig. 8a

Fig. 8b

Fig. 8c

Fig. 8d

Fig. 8e

**Figur 8**

Ersatzblatt

Figur 9

Figur 10

Figur 11

Figur 12

23

Fig. 13a

Fig. 13b

Fig. 13c

Fig. 13d

Figur 13

**Figur 14**

**Figur 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0431924 B1

- WO 9828124 A2